# EUROPÄISCHE PATENTSCHRIFT

(11) **EP 0 513 502 B1**
(45) Veröffentlichungstag und Bekanntmachung des Hinweises auf die Patenterteilung: **04.08.1993**
(21) Anmeldenummer: 92105111.6
(22) Anmeldetag: 25.03.1992
(51) Int. Cl.: H02G 3/26

(54) **Anbaukanal für Elektrokabel, Leitungen und dergleichen**
Mounting channel for electrical cable, lines and similar objects
Canal de montage pour câble électrique, lignes ou similaires

(30) Priorität: 15.05.1991 DE 9106019 U
(43) Veröffentlichungstag der Anmeldung: 19.11.1992
(73) Patentinhaber: REHAU AG + Co, 95111 Rehau (DE)
(72) Erfinder: Schubert, Klaus, W-8676 Schwarzenbach/Saale (DE)

(56) Entgegenhaltungen:
- FR-A- 2 313 786
- GB-A- 1 436 380

## Beschreibung

Die Neuerung betrifft einen Anbaukanal für Elektrokabel, Leitungen und dergleichen mit einer im wesentlichen U-förmigen Basisform und einem oder mehreren Deckelelementen zum Verschließen des Aufnahmeraumes an der Vorderseite, wobei an der rückseitigen Außenwand der U-förmigen Basisform Rastöffnungen für den Eingriff von Befestigungsarmen einer Wandkonsole angeordnet sind.

Ein derartiger Anbaukanal ist aus dem Britischen Patent 1 436 380 bekannt. Es handelt sich dabei um einen Installationskanal für das Verlegen von Elektrizitäts- oder Fernsprechkabeln mit einem rechteckförmigen Basisprofil und einer die offene Vorderseite dieses Profils abdeckenden Deckleiste. Der bekannte Installationskanal kann über eine Befestigungskonsole an der Wand eines Gebäudes festgelegt werden. Die Wandkonsole ist dabei derart ausgelegt, daß sie ein U- oder V-förmiges Profil besitzt und in sich elastisch ausgeführt ist. Auf diese Weise kann durch Zusammendrücken der U- oder V-Schenkel deren jeweils freies Ende in entsprechende Haltenuten an der rückseitigen Außenwand der U-förmigen Basisform eingreifen, wobei nach Aufheben der Druckkraft die U- bzw. V-Schenkel entspannen und den Installationskanal an der Konsole festlegen. Dafür sind die U- oder V-Schenkel an ihren freien Enden mit voneinander abgekehrten Vorsprüngen versehen, die bei der Entspannung hinter dafür vorgesehene Kanten an der rückseitigen Außenwand der U-förmigen Basisform greifen und damit das Festlegen des Installationskanals auf der Konsole bewirken.

Die Montage des bekannten, starren Installationskanals auf der bekannten flexiblen Konsole ist schwierig und nur unter größeren Aufwendungen an Fachpersonal durchzuführen. So muß für das Zusammendrücken der U- bzw. V-Schenkel wenigstens eine Fachkraft zur Verfügung stehen, während eine zweite solche Kraft den Installationskanal entsprechend führen muß.

Durch die relativ kurzen U- bzw. V-Schenkel ist die Presskraft beim Zusammendrücken unverhältnismäßig groß, was sich insbesondere dann als sehr nachteilig erweist, wenn ein Installationskanal größerer Länge über die bekannten flexiblen Wandkonsolen festgelegt werden soll.

Hier setzt die Neuerung ein, die es sich zur Aufgabe gestellt hat, die unverhältnismäßig hohen Kräfte beim Zusammenpressen der Konsolenschenkel nach dem Stand der Technik zu vermeiden und einen für die direkte Befestigung an Gebäudewandungen geeigenten Installationskanal anzugeben, der neben anderen Vorteilen von einer Fachkraft montiert werden kann. Neuerungsgemäß wird dazu vorgeschlagen, daß die Eingriffsöffnung mit ihren Seitenwandungen in den Aufnahmeraum hinein verlängert ist, daß die Seitenwand in einer Rundung in die die beiden Seitenwände verbindende Basiswand verläuft, und daß die räumlich von der ersten Eingriffsöffnung getrennte zweite Eingriffsöffnung als parallel zur rückseitigen Außenwand verlaufende Einstecköffnung für das zugeordnete Befestigungsteil der Wandkonsole ausgebildet ist.

Die neuerungsgemäße Ausführungsform des Anbaukanals für Wandbefestigung benützt eine starre, unflexible Wandkonsole, in die ein in Grenzen mit einer flexiblen Rückwand ausgestatteter Installationskanal einsetz- und festlegbar ist. Hierfür wird die Wandkonsole, die an ihren freien Enden entsprechende Abkröpfungen aufweist, zunächst über bekannte mechanische Verbindungsmittel an der Gebäudewandung festgelegt. Dies kann durch mit der Wand verdübelte Schrauben erfolgen. Die U-förmige Basisform des neuerungsgemäßen Anbaukanals besitzt eine starre, unflexible Eingriffsöffnung, in die das eine freie Ende der Wandkonsole eingreift. Die räumlich von dieser Eingriffsöffnung getrennte weitere Eingriffsöffnung für das andere freie Ende der Wandkonsole ist dagegen in Grenzen flexibel gehalten, so daß dort angeordnete Rastelemente im Rahmen dieser Flexibilität durch Druckanwendung von oben auf den Anbaukanal hinter das freie Ende der Wandkonsole einschnappen können.

Hierbei ist es von Vorteil, daß die rückseitige Außenwand des Anbaukanals zwischen der ersten Eingriffsöffnung und der zweiten Eingriffsöffnung um die Dicke des Halters der Wandkonsole in den Aufnahmeraum des Anbaukanals zurückversetzt ist. Dadurch kann ein planes rückseitiges Anliegen des Anbaukanals an der Gebäudewand herbeigeführt werden.

Es hat sich ferner als zweckmäßig erwiesen, daß die Eingriffsöffnung, die für das Einstecken des freien Endes der Wandkonsole ausgebildet ist, am Nutengrund einen in den Aufnahmeraum des Anbaukanals ragenden Wandungsteil aufweist. In dieser vergrößerten Öffnung kann das freie Ende der Wandkonsole beim Einstecken in den vorgegebenen Grenzen verschwenkt werden. Die gegenüberliegende, für das Aufschnappen auf das freie Ende der Wandkonsole ausgelegte Eingriffsöffnung besitzt eine Seitenwand, die bis zur rückseitigen Außenwand verläuft und am Übergang zwischen der Seitenwand und der rückseitigen Außenwand einen Rastvorsprung aufweist.

In der Zeichnung ist ein Ausführungsbeispiel eines neuerungsgemäßen Anbaukanals schematisch dargestellt; es zeigt:
Fig. 1 einen Querschnitt durch den Anbaukanal
Fig. 2 einen Teil-Querschnitt durch den Anbaukanal im Bereich der Verbindung mit der Wandkonsole

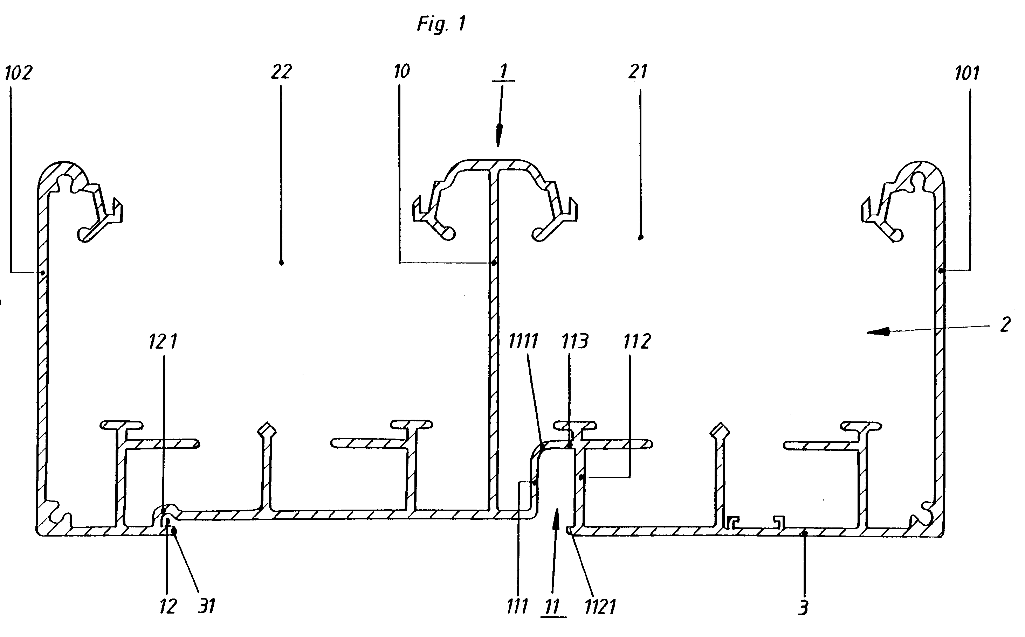

Fig. 1 zeigt den Anbaukanal 1 im Querschnitt ohne obere Deckelteile. Der dargestellte Kanalquerschnitt besitzt einen Aufnahmeraum 2, der durch die Mittelwand 10 in die beiden Teilaufnahmeräume 21, 22 unterteilt ist. Die Teilaufnahmeräume 21, 22 sind durch die Seitenwände 101, 102 seitlich begrenzt. In die rückseitige Außenwand 3 sind die Eingriffsöffnungen 11, 12 eingelassen. Hiervon besitzt die Angriffsöffnung 11 Seitenwandungen 111, 112 und eine beide Seitenwände 111, 112 verbindende Basiswand 113.

Die Seitenwand 111 verläuft hierbei in einer Rundung 1111 in die Basiswand 113.

Die Eingriffsöffnung 12 ist als parallel zur rückseitigen Außenwand 3 verlaufende Einstecköffnung für das zugeordnete Befestigungsteil 43 der Wandkonsole 4 ausgebildet. Aus der Darstellung geht weiter hervor, daß die rückseitige Außenwand 3 zwischen den Eingriffsöffnungen 11, 12 annähernd um die Dicke der Auflager 41, 42 der Wandkonsole 4 in den Aufnahmeraum 2 zurückversetzt ist. Ferner ist gezeigt, daß die die Eingriffsöffnung 12 begrenzende Wandung eine in den Aufnahmeraum 2 ragende Auswölbung 121 aufweist. Schließlich wird bei der Eingriffsöffnung 11 ersichtlich, daß die Seitenwand 112 entgegen der zurückversetzten Seitenwand 111 bis zur rückseitigen Außenwand verläuft, und daß am Übergang zwischen der Seitenwand 112 und der rückseitigen Außenwand 3 ein Rastvorsprung 1121 angeordnet ist.

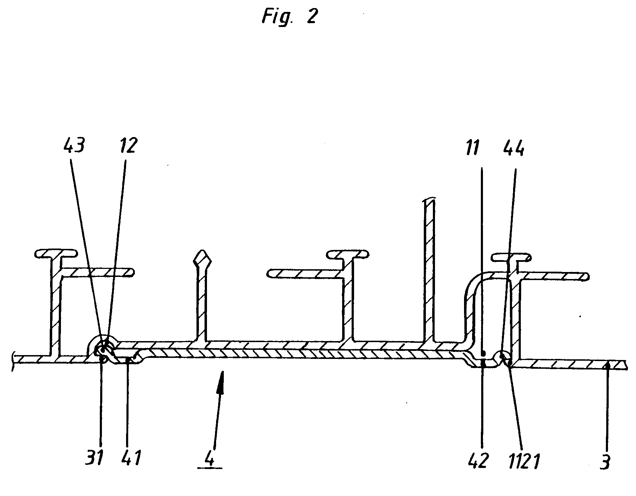

Der in Fig. 2 gezeigte Teilquerschnitt durch den Anbaukanal 1 im Bereich der Verbindung mit der Wandkonsole 4 zeigt den Eingriff der abgekröpften Befestigungsteile 43, 44 in die Eingriffsöffnungen 11, 12 des Anbaukanals 1. Die Befestigungsteile 43, 44 haben dabei die Wandbereiche 31 , 1121 hintergriffen und den Anbaukanal 1 über die Konsole 4 an der Gebäudewand festgelegt. Die Festlegung der Wandkonsole 4 an der Gebäudewand kann derart erfolgen, daß die Wandkonsole 4 über nicht gezeigte Durchgangsöffnungen in den Auflagern 41, 42 über Schraubelemente direkt mit der Gebäudewand fest verbunden ist.

## Patentansprüche

1. Anbaukanal für Elektrokabel, Leitungen und dergleichen mit einer im wesentlichen U-förmigen Basisform (113) und einem oder mehreren Deckelelementen zum Verschließen des Aufnahmeraumes (2) an der Vorderseite, wobei an der rückseitigen Außenwand (3) der U-förmigen Basisform (113) Rastöffnungen (11,12) für den Eingriff von Befestigungsarmen (43,44) einer Wandkonsole (4) angeordnet sind, dadurch gekennzeichnet, daß die Eingriffsöffnung (11) mit ihren Seitenwandungen (111, 112) in den Teilaufnahmeraum (21) hinein verlängert ist, daß die Seitenwand (111) in einer Rundung (1111) in die die beiden Seitenwände (111, 112) verbindende Basiswand (113) verläuft, und daß die räumlich von der Eingriffsöffnung (11) getrennte Eingriffsöffnung (12) als parallel zur rückseitigen Außenwand (3) verlaufende Einstecköffnung für das zugeordnete Befestigungsteil (43) der Wandkonsole (4) ausgebildet ist.

2. Anbaukanal nach Anspruch 1, dadurch gekennzeichnet, daß die rückseitige Außenwand (3) zwischen der Eingriffsöffnung (11) und der Eingriffsöffnung (12) annähernd um die Dicke der Halter (41, 42) der Wandkonsole (4) in den Aufnahmeraum (2) zurückversetzt ist.

3. Anbaukanal nach Anspruch 1, dadurch gekennzeichnet, daß die die Eingriffsöffnung (12) begrenzende Wandung eine in den Teilaufnahmeraum (22) ragende Auswölbung (121) aufweist.

4. Anbaukanal nach Ansprüchen 1 und 2, dadurch gekennzeichnet, daß die Seitenwand (112) der Eingriffsöffnung (11) bis zur rückseitigen Außenwand (3) verläuft und am Übergang zwischen der Seitenwand (112) und der rückseitigen Außenwand (3) einen Rastvorsprung (1121) für das zugeordnete Befestigunsteil (44) besitzt.

## Claims

1. Installation trunking for electric cables, wires and similar material comprising an essentially U-shaped basic section (113) and one or more cover elements closing off the useful space (2) at the front, and in which engaging apertures (11,12) are provided on the rear exterior face (3) of said U-shaped basic section to accept the snap location of the support arms (43,44) of a wall bracket (4), characterised by the fact that the side walls (111, 112) of said engaging apertures (11) are extended to project partially into the useful space (21), that the side wall (111) terminates in a curve (1111) to form the base (113) interconnecting the two side walls (111, 112), and that the engaging aperture (12), arranged separate from the engaging aperture (11) and running parallel to the rear exterior face (3), is shaped to accept the corresponding fitting element (43) of the wall bracket (4).

2. Installation trunking as in Claim 1, characterised by the fact that, between the engaging aperture (11) and the engaging aperture (12), the rear exterior wall (3) is set back into the useful space (2) by almost the thickness of the fixing elements (41, 42) of the wall bracket.

3. Installation trunking as in Claim 1, characterised by the fact that the wall defining the engaging aperture (12) is provided with a protrusion (121) projecting into one compartment (22) of the useful space.

4. Installation trunking as in Claims 1 and 2, characterised by the fact that the side wall (112) of the engaging aperture (11) extends to the rear exterior wall (3) and, at the junction of the side wall (112) and the rear exterior wall (3), is provided with a snap lip (1121) to retain the corresponding fixing element (44).

## Revendications

1. Canal de montage pour câbles électriques, lignes et semblables avec une base (113) principalement en forme de U et un ou plusieurs éléments de recouvrement pour fermer l'espace de réception (2) sur la face, des ouvertures à crans d'arrêt (11, 12) étant installées sur la paroi extérieure (3) au dos de la base en forme de U (113) pour la prise des bras de fixation (43, 44) d'une console murale (4), caractérisé par le fait que l'ouverture de prise (11) est prolongée dans le compartiment partiel (21) par ses parois latérales (111, 112), caractérisé par le fait que la paroi latérale (111) présente une courbure (1111) dans laquelle la paroi de base (113) reliant les deux parois latérales (111, 112) se perd, et caractérisé par le fait que l'ouverture de prise (12) séparée localement de l'ouverture de prise (11) est constituée sous la forme d'une ouverture d'emboîtement se trouvant parallèle à la paroi extérieure (3) pour la pièce de fixation adjointe (43) de la console murale (4).

2. Canal de montage selon la revendication 1, caractérisé par le fait que la paroi extérieure (3) au dos entre l'ouverture de prise (11) et l'ouverture de prise (12) est déplacée de l'épaisseur des supports (41, 42) de la console murale (4) dans l'espace de réception (2).

3. Canal de montage selon la revendication 1, caractérisé par le fait que la paroi limitant l'ouverture de prise (12) présente un bombement en saillie (121) dans l'espace de réception partielle (22).

4. Canal de montage selon les revendications 1 et 2, caractérisé par le fait que la paroi latérale (112) de l'ouverture de prise (11) va jusqu'à la paroi extérieure (3) se trouvant au dos et possède une pièce en saillie (1121) se trouvant au passage entre la paroi latérale (112) et la paroi extérieure (3) au dos destinée à la pièce de fixation adjointe (44).
